Europäisches Patentamt

(19) European Patent Office

Office européen des brevets

(11) Publication number: **0 254 566**
**A2**

(12) # EUROPEAN PATENT APPLICATION

(21) Application number: **87306515.5**

(22) Date of filing: **23.07.87**

(51) Int. Cl.⁴: **F 16 C 17/12**

(30) Priority: **24.07.86 US 889652**

(43) Date of publication of application:
**27.01.88 Bulletin 88/04**

(84) Designated Contracting States: **DE FR GB IT SE**

(71) Applicant: **THE GARRETT CORPORATION**
**9851-9951 Sepulveda Boulevard P.O. Box 92248**
**Los Angeles, California 90009 (US)**

(72) Inventor: **Gu, Alston Lee-Van**
**5832 Sunmist Drive**
**Rancho Palos verdes§California 90274 (US)**

(74) Representative: **Rees, David Christopher et al**
**Kilburn & Strode 30 John Street**
**London WC1N 2DD (GB)**

(54) **Foil journal bearing.**

(57) A fluid film foil journal bearing (10) comprising a bushing (14), a shaft (12) supported within the bushing (14), and a foil bearing (16). The foil bearing (16) includes a plurality of overlapping compliant foils (20) which have one or more axially extending lines of holes (32,42) for cooling fluid to pass from beneath the foils (2) to the bearing surface.

FIG. 2

EP 0 254 566 A2

**Description**

FOIL JOURNAL BEARING

The present invention relates to foil journal bearings and is particularly concerned with their cooling during use.

Process fluid or gas bearings are now being used in an increasing number of diverse applications. These fluid bearings generally comprise two relatively movable elements with a predetermined spacing therebetween filled with a fluid such as air, which, under dynamic conditions, forms a supporting wedge sufficient to prevent contact between the two relatively moving elements.

More recently, improved fluid bearings, particularly gas bearings of the hydrodynamic type, have been developed by providing foils in space between the relatively movable bearing elements. Such foils, which are generally thin sheets of a compliant material, are deflected by the hydrodynamic film forces between adjacent bearing surfaces and the foils thus enhance the hydrodynamic characteristics of the fluid bearings and also provide improved operation under extreme load conditions when normal bearing failure might otherwise occur. Additionally, these foils provide the added advantage of accommodating eccentricity of the relatively movable elements and further provide a cushioning and dampening effect.

The ready availability of relatively clean process fluid or ambient atmosphere as the bearing fluid makes these hydrodynamic, fluid film lubricated, bearings particularly attractive for high speed rotating machinery. While in many cases the hydrodynamic or self-acting fluid bearings provide sufficient load bearing capacity solely from the pressure generated in the fluid film by the relative motion of the two converging surfaces, it is sometimes necessary to pressurise the fluid externally between the bearing surfaces to increase the load carrying capability. While these externally pressurised or hydrostatic fluid bearings do increase the load carrying capacity, they also introduce the requirement for an external source of clean fluid under pressure.

In order to position the compliant foils properly between the relatively movable bearing elements, a number of mounting means have been devised. In journal bearings, it is conventional practice to mount the individual foils in a slot or groove in one of the bearing elements as shown in U.S. Patent No. 3,615,121.

To establish stability of the foils in most of these mounting means, a substantial pre-load is required on the foil. That is, the individual foils must be loaded against the relatively movable bearing element opposed to the bearing element upon which the foils are mounted. It has been conventional to provide separate compliant stiffener elements or underfoils beneath the foils to supply this required preload as shown in U.S. patent Nos. 3,893,733 and 4,153,315.

In order to facilitate start-up and to reduce bearing wear, the bearing surfaces of the individual foils may be coated with a high lubricity material such as a stratified fluorocarbon, molybdenum disulphide, graphite fluoride, or the like. The use of such coatings, while enhancing the life of the foil bearing, introduces certain operating temperature limitations. As still higher temperature environments as envisaged for foil bearing operation, the temperature limitations of these coatings become critical since they cannot survive as high a temperature as the underlying generally metallic foil. Thus, higher temperature coatings must be developed or means found to limit the operating temperature at the coated foil bearing surfaces. Examples of prior cooling schemes for foil thrust bearings can be found in U.S. patent Nos. 4,227,753 and 4,247,155 and in EP 186263-A.

It is therefore an object of the present invention to provide a foil journal bearing which is capable of operation with a diminished likelihood of failure in high temperature environments.

According to the present invention there is provided A fluid film foil journal bearing comprising a bushing, a shaft rotatably supported within the bushings, and a compliant foil bearing located between the bushing and the shaft, the foil bearing including a plurality of overlapping individual foil elements, characterised in that the foil elements have a plurality of cooling holes which allow cooling fluid to pass from beneath the foil elements to the upper surface of the foil elements.

Preferably, there are a plurality of individual foil stiffener elements located between the bushing and the corresponding individual foil elements. Preferably, the foil elements are arcuate and the stiffener elements are arcuate, the curvature of the stiffener elements being greater than that of the foil elements. Preferably, the stiffener elements have alternating upper ridges and lower ridges extending generally radially.

Thus, in the present invention, the foil journal bearing is provided with openings in the individual overlapping foils to enable the flow of cooling fluid from beneath the foils to the upper surface of the foils. The openings are preferably located in the vicinity of the beginning of the hydrodynamic supporting wedge when the bearing is in use, near the overlap from adjacent foils. Where an underspring is used, the openings should be over a lower ridge so as not to restrict the flow of cooling fluid from around the underspring to the cooling holes in the individual foils. Since viscous shearing of the fluid film between the bearing foils and the rotatable element is a significant source of heating of the coated foil surfaces, the supply of cooling flow from underneath the foils at the beginning of the hydrodynamic supporting wedge will reduce the operating temperature of the foil journal bearing.

Preferably, the cooling boiler in the individual foil elements are configured in an axially extending row. Preferably, the axially extending row of cooling holes in the individual foil elements is disposed in the vicinity of where adjacent foil elements overlap.

Alternatively, the individual foil elements have at least two axially extending rows of cooling holes with one row of holes axially displaced from the other row of holes. In either case, preferably, the axially extending rows of cooling holes are generally disposed between adjacent upper ridges of the said individual foil stiffener elements.

Preferably, the individual foil elements and the individual stiffener elements are mounted in position by means of axially extending channels in the bushing.

The invention also extends to a compliant foil for use in a fluid film journal bearing comprising a generally arcuate compliant member having a plurality of cooling holes therein. Such a foil may include the preferred features outlined above.

The invention also extends to a method of supporting relative rotation of a shaft within a bushing comprising the steps of: providing a plurality of compliant overlapping foils between the shaft and bushing; and directing the flow of fluid from beneath the foils to cool the fluid film established between the foils and the shaft during relative rotation.

According to one preferred embodiment of the invention, there is provided a fluid film journal bearing comprising: a bushing; a shaft rotatably supported within the bushing; and a compliant foil bearing operably disposed within the bushing, the compliant foil bearing including a plurality of individual arcuate foil elements mounted within the bushing, each having its trailing edge overlapping the adjacent foil element, and a plurality of individual foil stiffener elements having alternating upper ridges and lower ridges extending generally radially with individual foil stiffener elements mounted within the bushing underneath individual foil elements, the individual foil elements having at least one axially extending row of cooling holes just beyond where the trailing edge of the adjacent foil element overlaps to provide fluid from beneath the foil element to the bearing surface, the cooling holes having a diameter of between 0.01 inches and 0.50 inches (0.25mm to 12.7mm) disposed between adjacent upper ridges in the foil stiffener element beneath the foil element.

According to another preferred embodiment of the invention, there is provided a fluid film journal bearing comprising: a bushing; a shaft rotatably supported within the bushing; and a compliant foil bearing operably disposed within the bushing, the compliant foil bearing including a plurality of individual foil elements mounted within the bushing, each having its trailing edge overlapping the leading edge of the adjacent foil element and a plurality of individual foil stiffener elements having alternating upper ridges and lower ridges extending generally radially with individual foil stiffener elements mounted within the bushing underneath individual foil elements, the individual foil elements having at least two axially extending rows of cooling holes beyond where the trailing edge of the adjacent foil element overlaps to provide fluid from beneath the foil element to the bearing surface, the rows of cooling holes each disposed between adjacent upper ridges in the foil stiffener element with an upper ridge disposed between the two rows of cooling holes.

The invention may be carried into practice in various ways and some embodiments will now be described by way of example with reference to the accompanying drawings in which:

Figure 1 is a perspective view of a foil journal bearing of the present invention;

Figure 2 is a sectional view of the foil journal bearing taken along line 2-2 of Figure 1;

Figure 3 is a perspective view of an individual foil of the foil journal bearing of Figure 1 having a single row of openings;

Figure 4 is a perspective view of an alternative individual foil having two rows of openings;

Figure 5 is an enlarged fragmentary sectional view illustrating an individual foil opening in the vicinity of the foil overlap; and

Figure 6 is an enlarged fragmentary sectional view illustrating the foil openings of the alternative individual foil of Figure 4 in relation to the upper ridges of the undersprings.

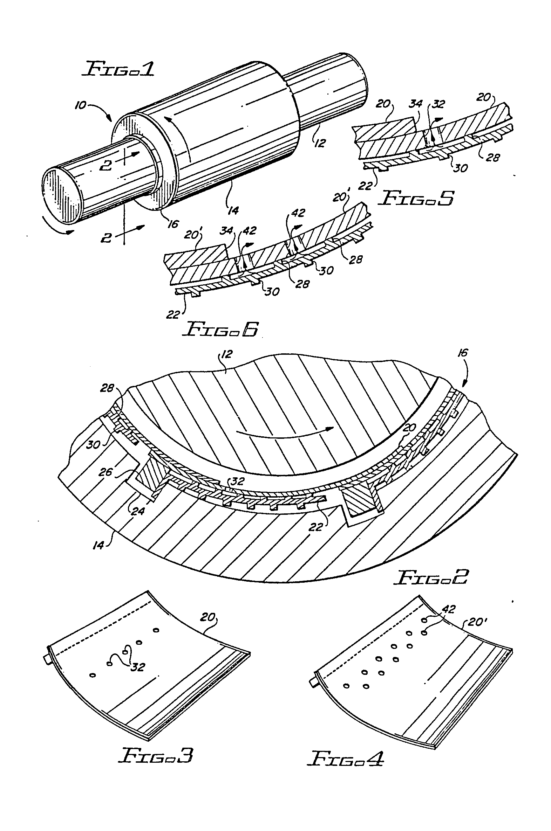

As generally illustrated in Figure 1, the journal bearing 10 includes a shaft 12 rotatably supported within a bushing 14 by means of a foil bearing 16. The foil bearing 16, shown in Figure 2, generally comprises a plurality of individual, overlapping complaint foils 20 and a corresponding number of individual foil stiffener elements or undersprings 22. Both the foils 20 and undersprings 22 are mounted in axial slots 24 in the bushing 14 in a conventional manner. While the individual curved foils 20, normally of a thin compliant metallic material are illustrated as having a separate mounting bar 26 at their leading edges, the mounting means may be formed integrally with the individual foils and/or with the foils 20 may have mounting means intermediate their ends as shown in U.S. patent 4,178,046.

The underspring 22, also normally of a thin compliant metallic material, generally has a predetermined curvature greater than the curvature of the individual foils 20 and includes a plurality of axially extending upper ridges 28 alternately disposed with a plurality of axially extending lower ridges 30. The function of the undersprings 22 is described in detail in US patent Nos. 4,153,315 and 4,195,395.

As best illustrated in Figure 3, each individual foil 20 includes a plurality of cooling holes 32. The holes 32 are generally aligned in an axial row in the vicinity of the beginning of the position in use of the hydrodynamic supporting wedge, just past the trailing edge 34 of the adjacent overlapping foil as shown in Figures 2 and 5. In this position, the cooling flow can mix with the bearing film flow without adversely affecting the hydrodynamic pressure build up from the relative rotation of the shaft 12 and bushing 14. The diameter of the cooling holes 32 may be of the order of 0.1 inches (2.5mm) in diameter but may range from 0.1 to 0.50 inches (0.25 to 12.7mm). The holes would generally be sized to provide sufficient cooling flow to reduce materially the temperature of the foil bearing surface without adversely affecting the hydrodynamic wedge or the compliance of the individual foils.

In order to prevent an upper ridge 28 of the

5     **0 254 566**     6

underspring 22 from restricting the flow of cooling flow through the cooling holes 32, the axial row of holes 32 would be positioned, during the operating configuration of the foil bearing 16, to be between adjacent upper ridges 28 as illustrated in Figure 5.

The alternative individual foil 20' of Figure 4, includes two axial rows of cooling holes 42, with the cooling holes in the axial row closest to the trailing edge of foil 20' generally between (or offset from) the cooling holes in the axial row farthest from the trailing edge. Each of the axial rows of cooling holes 42 would be disposed over an opening between two upper ridges of the underfoil beneath the foil 20' with an upper ridge between the axial rows as shown in Figure 6.

In this manner, by providing cooling holes in the individual foil, such that the cooling flow will mix with the bearing film flow, the operating temperature of the journal bearing can be reduced.

**Claims**

1. A fluid film foil journal bearing (10) comprising a bushing (14), a shaft (12) rotatably supported within the bushings (14), and a compliant foil bearing (16) located between the bushing (14) and the shaft (12), the foil bearing (16) including a plurality of overlapping individual foil elements (20), characterised in that the foil elements (20) have a plurality of cooling holes (32,42) which allow cooling fluid to pass from beneath the foil elements (20) to the upper surface of the foil elements (20).

2. A journal bearing as claimed in Claim 1 characterised by a plurality of individual foil stiffener elements (22) located between the bushing (14) and the corresponding individual foil elements (20).

3. A journal bearing as claimed in Claim 2 characterised in that the foil elements (20) are arcuate and the stiffener elements (22) are arcuate, the curvature of the stiffener elements (22) being greater than that of the foil elements (20).

4. A journal bearing as claimed in Claim 2 or Claim 3 characterised in that the stiffener elements (22) have alternating upper ridges (20) and lower ridges (30) extending generally radially.

5. A journal bearing as claimed in any preceding claim characterised in that the cooling holes (32) in the individual foil elements (20) are configured in an axially extending row.

6. A journal bearing as claimed in Claim 5 characterised in that the axially extending row of cooling holes (32) in the individual foil elements (20) is disposed in the vicinity of where adjacent foil elements (20) overlap.

7. A journal bearing as claimed in any of claims 1 to 4 characterised in that the individual foil elements (20') have at least two axially extending rows of cooling holes (42) with one row of holes (42) axially displaced from the other row of holes (42).

8. A journal bearing as claimed in any of Claims 4 to 7 characterised in that the axially extending rows of cooling holes (32,42) are generally disposed between adjacent upper ridges (28) of the said individual foil stiffener elements (22).

9. A journal bearing as claimed in any preceding claim, characterised in that the cooling holes (32,42) in the individual foil elements (20) are between 0.01 inches and 0.50 inches (0.25 to 12.7mm) in diameter.

10. A journal bearing as claimed in any of Claims 2 to 9 characterised in that the individual foil elements (20) and the individual stiffener elements (22) are mounted in position by means of axially extending channels (24) in the bushing (14).

4

0254566

FIG. 1

FIG. 5

FIG. 6

FIG. 2

FIG. 3

FIG. 4